# EUROPEAN PATENT SPECIFICATION

(11) **EP 2 867 185 B1**
(45) Date of publication and mention of the grant of the patent: **28.08.2019**
(21) Application number: 13713758.4
(22) Date of filing: 04.03.2013
(51) Int. Cl.: C04B 41/65

(54) **METHOD FOR MAKING A CERAMIC COATED SUBSTRATE**
VERFAHREN ZUR HERSTELLUNG EINES MIT KERAMIK BESCHICHTETEN SUBSTRATS
PROCÉDÉ DE FABRICATION D'UN SUBSTRAT REVÊTU DE CÉRAMIQUE

(30) Priority: 29.06.2012 EP 12290216; 02.07.2012 EP 12290220
(43) Date of publication of application: 06.05.2015
(73) Proprietor: IMERTECH SAS, 75015 Paris (FR); Centre National de la Recherche Scientifique, 75794 Paris Cedex 16 (FR)
(72) Inventor: GAGSNIER, Gilles, F-75007 Paris (FR); GRIMAUD, Alain, F-8700 Limoge (FR); DENOIRJEAN, Alain, F-75794 Paris Cedex 16 (FR); ARCONDEGUY-BACH, Aure, F-87270 Couzeix (FR); MONTAVON, Ghislain, F-75794 Paris Cedex 16 (FR)
(74) Representative: Haseltine Lake Kempner LLP
(86) International application number: PCT/EP2013/054240
(87) International publication number: WO 2014/000896

(56) References cited:
- DE-A1- 2 060 223
- ARCONDEGUY A ET AL: "Glazes coatings manufactured by flame-spraying onto thermally sensitive substrates: Heat fluxes measurements and some mechanical properties", PROCEEDINGS OF THE INTERNATIONAL THERMAL SPRAY CONFERENCE - EXPANDING THERMAL SPRAY PERFORMANCE TO NEW MARKETS AND APPLICATIONS - PROCEEDINGS OF THE 2009 INTERNATIONAL THERMAL SPRAY CONFERENCE, ITSC 2009 2009 ASM INTERNATIONAL USA, 2009, pages 579-584, XP9170385, DOI: 10.1361/CP2009ITSC0579 cited in the application

## Description

### TECHNICAL FIELD

The present invention relates to a method of making a ceramic coated substrate.

### BACKGROUND OF THE INVENTION

A problem with certain materials, such as concrete, is that they are sensitive to the elevated temperatures which are normally used in conventional vitreous glazing processes (up to 1400°C) which are required to fuse the glaze after application on the surface to be covered. The process cannot therefore be used without severe degradation.

It has previously been found that a ceramic coating may be applied to a substrate, such as concrete, employing a flame spraying process and using a highly fusible ceramic powder, see for example Arcondéguy et al., in "Flame-Sprayed Glaze Coatings: Structure and Some Properties", Thermal Spray 2007: Global Coating Solutions (2007), pp. 1017-1022, and Arcondéguy et al., Thermal Spray 2009, pp. 579-584.

US Patent No.3,956,534 (Brown et al.) describes a process in which concrete blocks may be provided with a glass coating on an external surface by flame spraying. The surface to be coated usually is heated prior to spraying.

### SUMMARY OF THE INVENTION

The invention relates to a method of making a ceramic coated substrate in which a ceramic material is thermally sprayed onto the surface of a heat-sensitive substrate. In one embodiment, the thermal spraying method is flame spraying. In one embodiment, the thermal spraying method is plasma spraying. In the method, the surface or skin of the substrate, but not the bulk of the substrate located immediately below the surface, is heated to an elevated temperature, and the ceramic material is sprayed onto the heated surface. The resulting product comprises the substrate with a thin ceramic coating on the surface. The coating, which may be pigmented, is durable and has good barrier and wear properties. The coating may also be glossy or matt, depending on the temperature.

In particular, the present invention provides a method for applying a ceramic coating to a heat sensitive substrate, comprising:
(a) heating a surface layer of at least a portion of the substrate to a temperature in the range of from 350 to 800°C, such as from about 400 to 600°C, while maintaining a temperature of 250°C or less in the substrate at a depth of 1 mm or more below the surface layer;
(b) providing a ceramic material in a form suitable for thermal spraying; and
(c) thermal spraying the ceramic material onto the heated surface layer of the substrate;
wherein the ceramic material to be sprayed onto the heated surface comprises a fusible ceramic material.

In an embodiment of the invention, in step (c) the surface may be heated to a temperature in the range from about 550°C to 1200°C.

In an embodiment of the invention, the ceramic material is flame sprayed onto the said surface layer, such as through a spray gun or a burner. In an embodiment of the invention, the ceramic material is plasma sprayed onto the said surface layer.

### BRIEF DESCRIPTION OF THE FIGURES

Figure 1 is a schematic illustration of the method of the present invention.
Figure 2 is a schematic illustration of a flame spray applicator suitable for use in the method of the present invention.
Figure 3 is a schematic illustration of a flame burner applicator suitable for use in the method of the present invention.
Figure 4 is a schematic illustration of a plasma spray applicator suitable for use in the method of the present invention.

### DETAILED DESCRIPTION

The method of the present invention may be applied to any suitable heat sensitive substrate. For example, the method may be applied to substrates which suffer thermal degradation when the temperature of the material of the substrate is maintained at a temperature greater than 300°C, or greater than 400°C or greater than 500°C, for a prolonged period, for example more than 60 seconds (for comparison, a traditional glazing process would require at least 10 minutes at temperatures in excess of this range). Examples of suitable materials from which the substrate may be made include natural stone, granite, syenite, marble, geopolymer concrete, ceramics, cementitious materials such as concrete, concrete-containing materials and cement composite materials, and other inorganic, non-metallic building material, such as clay bricks or fire bricks. Typically, the present invention will be used for the coating of a concrete substrate.

In the method, a surface layer of the substrate being coated is heated to a temperature of 550°C or more, or 900°C or more, or 1000°C or more , for example in the range of 550°C to 1200°C, or in the range of 900°C to 1200°C, such as for example 1050°C to 1150°C, or about 1100°C during powder impingement. This heating is transient, and the average surface temperature of the substrate measured by thermal imaging camera in a circle of 70 mm centered on the flame, or plasma beam, 1 second after its passage falls into the range of from about 150°C to 650°C, such as for example from 400°C to 600°C. This heating is localized in the outer periphery of the substrate, while maintaining a temperature of about 250°C or less in the substrate at a depth of 1 mm or more below the surface layer. In an embodiment, the average surface temperature of the substrate measured by thermal imaging camera in a circle of 70 mm centered on the flame, or plasma beam, 1 second after its passage falls into the range of from about 450°C to 550°C. The temperature in the substrate at a depth of 1 mm or more below the surface layer may be maintained at about 200°C or less, or about 150°C or less. In an embodiment, the average surface temperature of the substrate measured by thermal imaging camera in a circle of 70 mm centered on the flame, or plasma beam, 1 second after its passage falls into the range of from about 400°C to 600°C, while maintaining a temperature of about 150°C or less in the substrate at a depth of 1 mm or more below the surface layer.

The surface layer of the substrate may be heated by any suitable method. For example, the surface may be exposed to a flame or a flow of a hot gas or plasma or infrared radiation. The heating of the surface of the substrate also serves to ensure that the surface of the substrate is free from moisture, which might otherwise interfere with the high temperature spraying operation.

The ceramic material is provided in a physical form which is suitable for thermal spraying, and in particular suitable for flame or plasma spraying where the method of application of the ceramic material is by a flame or plasma spray technique. Thus, for example, the ceramic material may be in a particulate form, or may be in the form of a wire or a rod.

The ceramic material can comprise any suitable ceramic material, such as fritts, glasses, standard window glasses, borosilicate glasses, glass culet, ceramic porcelain, ceramic china, ceramic earthenware, ceramic stoneware, or mixtures thereof. In one embodiment, the ceramic material may comprise natural raw materials such as natural silicates, carbonates, oxides and hydrates. Suitable sources of natural silicates include one or more of kaolin, metakaolin, feldspars, pegmatite, nepheline syenite, lithiumspars (or lithium minerals), quartz, andalusite, kyanite, sillimanite.

Any type of clay is suitable for use in making the ceramic material. For example, one or more of kaolin, ball-clay, fireclay, smectite clay, illitic clay may be present including mixtures thereof. The clay may or may not be calcined. Suitable feldspars may be selected from one or more of sodium feldspar, potassium feldspar, calcium feldspar, sodium-calcium feldspar, sodium-potassium feldspar and mixtures thereof. Suitable lithiumspars, or lithium minerals, include one or more of spodumene, petalite, lepidolite, bikitaite and mixtures thereof.

The raw materials, e.g. clay, for use in preparing the ceramic material may be prepared by light comminution, e.g. grinding or milling (e.g. ball milling), of a coarse raw material, e.g. kaolin, to give suitable delamination thereof. The comminution may be carried out by use of beads or cylinders of a ceramic, e.g. alumina, grinding or milling aid. Other ceramic media, for example zirconia or silica may also be used. The coarse raw material may be refined to remove impurities and improve physical properties using well-known procedures. The ground material may be treated by a known particle size classification procedure, e.g. screening and/or centrifuging, to obtain particles having a desired d₅₀ value.

Where the ceramic material is in a particulate form, it may have a d₅₀ up to about 100 µm, or up to about 70 µm, or up to about 60 µm, or up to about 40 µm, and may for example have a d₅₀ of at least 1 µm, or at least 20 µm, or at least 40 µm. For example, the particulate material may have a d₅₀ in the range of about 1 to 100 µm, or in the range of from 20 to 70 µm, or in the range 20 to 60 µm or in the range of from 40 to 60 µm.

In one embodiment, the ceramic material is transported to the heated surface of the substrate by means of a thermal spraying technique, for example by flame spraying or by plasma spraying. In thermal spraying, the ceramic material is introduced into the flame, or plasma beam, of a thermal spray device where it melts and is carried by the combustion gases, or plasma beam, in the form of particles to impact the substrate surface at a moderate velocity, for example from 10 to 700 m/s, typically at least 24 m/s, such as from 24 to 100 m/s. In certain embodiments, the in-flight particle speed may be in the range of from 50 to 100 m/s. In other embodiments, the in-flight particle speed may be in the range of from 10 to 50 m/s. Where the ceramic material is not already in a particulate form, such as a wire, the ceramic melts in the flame to form droplets which are carried by the combustion gases to the substrate surface.

Flame and plasma spraying are known methods for creating a coating on a surface. In the flame spraying method, combustion gases, typically from the burning of acetylene (or natural gas) in an oxygen atmosphere, melt the material to be coated on the surface and propel the molten droplets formed to the surface. In the plasma spraying method, a plasma arc, typically created by a high voltage applied to a gas or gas mixture (N₂, Ar, H₂, He), melts the material to be coated on the surface and propel the molten droplets formed to the surface. By these methods, a coating can be deposited at a very high spray rate. Although not wishing to be bound by theory, it is believed that, using a flame or plasma spray process in conjunction with fusible ceramic particle as the feedstock, coating of the surface of the substrate proceeds by coalescence of impinging particles to form a monolayer.

During thermal spraying, the ceramic material is heated to a temperature at which it melts to form droplets. For example, the conditions of thermal spraying may be adjusted such that the temperature in the flame is at least about 850°C, such as at least about 1000°C, or is in the range of from about 1000°C to 1300°C, or is at least 1500°C. In an embodiment, the temperature is about 1200°C. In flame spraying, the temperature of the flame depends on the gas used. In plasma spraying, the temperature depends on the power applied.

Adjustment of the thermal flux transmitted to the substrate may be achieved in changing the distance between the device and the substrate, typically 70 to 200 mm, and the process productivity, that is to say the speed of the passage of the flame, or plasma, and the mass feed rate.

In embodiments of the invention, the mass feed rate of ceramic material to the thermal sprayer device may be at least about 10 g·min⁻¹, or may be at least about 20 g·min⁻¹, or may be at least about 30 g·min⁻¹, or may be at least about 50 g·min⁻¹, or may be at least about 100 g·min⁻¹, or may be at least about 150 g·min⁻¹. In other embodiments of the invention, the mass feed rate of ceramic material to the thermal sprayer device may range from about 50 to about 200 g·min⁻¹, or from 120 to 170 g·min⁻¹. The thermal power of the thermal spray device should be chosen to be capable of spraying at the desired mass feedstock rate. For example, at a mass feedstock rate of about 30 g·min⁻¹, a thermal power of about 200 W may be required.

The method of the invention may be carried out to continuously produce a coated product at the rate of at least about 1 m²·h⁻¹, for example at the rate of at least about 5 m²·h⁻¹, and above. In an embodiment, the process productivity may be about 6 m²·h⁻¹ or above.

In embodiments of the invention, other components may be fed to the thermal spray along with the ceramic material. Thus, by way of example, suitable pigment materials may be included to pigment the coating. These may be separately fed to the spray, for example as homogenous colored grains, or may be included in the ceramic material as an additive.

The coating on the substrate may have a thickness of at least about 100 µm, or at least 200 µm, or at least 300 µm. Typically, coatings will be no greater than 1000 µm in thickness, or no greater than 750 µm, or no greater than about 500 µm. By way of example, in a embodiment, the coating may have an average thickness of about 400 µm ± 50 µm.

The average temperatures achieved by the surface of the substrate after spraying is in the range of 150°C to 700°C, such as for example in the range of from 500 to 700°C, such as for example in the range of from 550 to 650°C, measured by thermal imaging camera in a circle of 70 mm centered on the coating flame, or plasma arc, 1 s after its passage

After the coating has been applied to the substrate, it is allowed to cool and may be subjected to further post-treatments in a manner which is known per se.

Unless otherwise stated, the d₅₀ mean (average) equivalent particle diameter referred to herein is as measured by laser light particle size analysis using a CILAS technique. The (CILAS) measurements use a particle size measurement as determined by laser light particle size analysis using a Horiba Partica laser scattering particle size distribution analyser LA-950V2. In this technique, the size of particles in powders, suspensions and emulsions may be measured using the diffraction of laser beams, based on application of the Fraunhofer theory. The term d₅₀ (CILAS) used herein is the value determined in this way of the particle diameter at which there are 50% by volume of the particles which have a diameter less than the d₅₀ value. The preferred sample formulation for measurement of particle sizes is a suspension in a liquid. Samples of the material were dispersed in water with the aid of an ultrasonic device fitted with the Horiba equipment.

Another thermal spraying method which may be used to spray the ceramic material onto the surface is plasma spraying in which the ceramic material to be deposited is introduced into a plasma jet emanating from a plasma torch. In one embodiment, HVOF (high velocity oxy-fuel) apraying can be used.

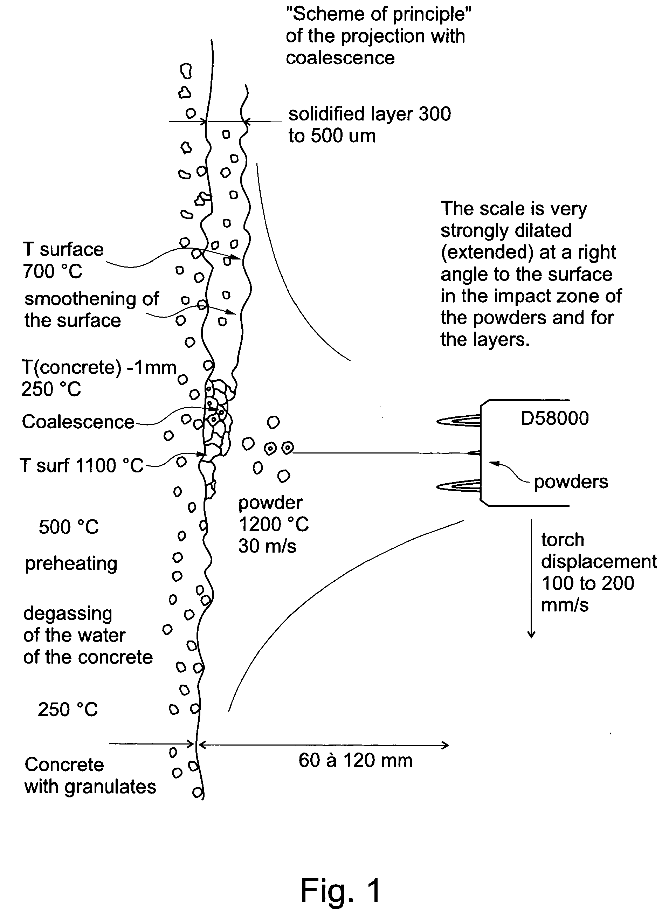

The invention will now be illustrated, without limitation, by reference to Figure 1, which is a schematic illustration of the method of the present invention.

In the method of the invention, a fusible ceramic material is provided, in the form of a wire, rod or particles. In an example, the ceramic material has a d₅₀ of 54 µm. The ceramic material is introduced at a feed rate of 0.5 to 3.6 kg·h⁻¹ into a spray device where it is heated to form of molten droplets of the ceramic at a temperature of about 1200°C.

The particles are accelerated in the thermal spray to a velocity of between 10 m·s⁻¹ and 300 m·s⁻¹ and impact the surface of the substrate to coat the surface of the substrate.

Prior to the coating step, the surface of the substrate is preheated to a temperature of about 400 to 750°C, such as from 450-550°C, while maintaining the temperature of the substrate at a depth of 1 mm or more below 250°C. Coating of the surface occurs whilst the surface is in this preheated state.

The method allows the formation of a solidified ceramic coating on the surface having a thickness of 300 to 500 µm, for example 400 µm ± 50 µm (step 4).

Typical substrate physical properties are shown in Table 1 below.

**Table 1**

| | |
|---|---|
| Thermal diffusivity [mm²·s⁻¹] | 0.88 at 100°C |
| | 0.52 at 500°C |
| Thermal conductivity [W·m⁻¹·K⁻¹] | 1.90 at 100°C |
| | 1.13 at 500°C |
| Apparent density [-] | 2.4 |
| Specific heat [J·kg⁻¹·K⁻¹] | 900 at 20°C |
| Linear coefficient of thermal expansion [K⁻¹] | 9·10⁻⁶ from 20 to 500°C |
| Emissivity [-] | 0.9 at 100°C |

Using a mass feedstock rate of 30 g·min⁻¹, a thermal power of 200 W is required to fuse the powder, corresponding to a productivity of about 1.2 m²·h⁻¹.

Several examples will be shown, describing various coating possibilities which can be obtained using various spraying processes.

### Example 1: Flame spraying

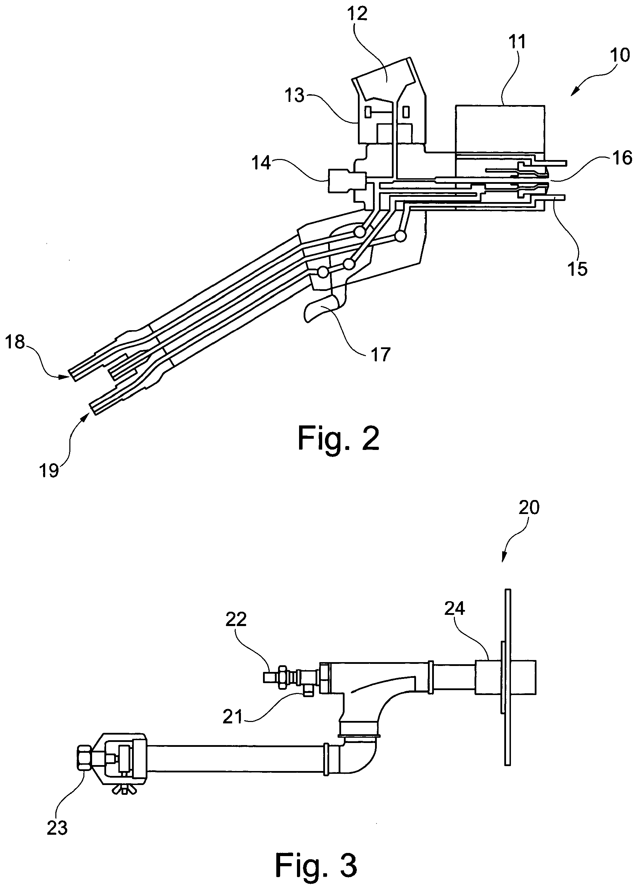

Figure 2 illustrates a flame spray projection device as used in the above example. The flame sprayer device 10 comprises a projection block 11, a powder reservoir 12, a module holder 13, a powder injector 14, an air focusing nozzle 15, a flame nozzle 16 and a quick stop 17. Oxygen is fed through oxygen inlet 18 and acetylene is fed through inlet 19. Specifically the device used in the examples was an oxyacetylene torch flame type CastoDyn DS8000, with a spray nozzle type SSM30 having a geometry suitable for the projection of ceramic powders. Operating pressures were those given by the supplier: 4.0 bar and 0.7 bar for O₂ to C₂H₂ respectively. The operating flow rates were 37.5 L·min⁻¹ for O₂ and 12.5 L·min⁻¹ for C₂H₂. An oxidizing flame was used to maintain color oxides projected.

The powder was injected axially at a mass flow of powder of 30 g·min⁻¹, which allowed a coverage rate of 1.2 m² per hour for a thickness between 300 µm and 500 µm. The cord of powder deposited on the substrate and had a width of about 7 mm. The flame spread on the substrate (a surface of about 70 mm in diameter) contributing to the smooth formation of the deposit, while maintaining surface temperature within the desired range.

The distance between the flame spray head and the substrate varied between about 80 mm and about 110 mm. The nozzle of the torch was cooled by circulation of water to prevent the self-combustion of the acetylene which can occur at temperatures above 110°C (to reduce risk of premature wear of the joints).

Coatings obtained with these parameters presented a glossy surface and a good adhesion of about 2 MPa, as measured using the Elcomer traction test according to EN 1542:1999.

By reduction of the residence time of the ceramic particles in the flame, it was possible to obtain improved coating adhesion over 3.5 MPa, but with a matt coating surface.

### Example 2: Flame burner

Figure 3 illustrates a burner device 20 as used in the above example, comprising a powder inlet 21, an oxygen inlet 22, a natural gas inlet 23 and a stainless steel nozzle 24. The burner was operated using a mixture of natural gas and oxygen at a power of 50 kW.

The powder was injected axially at a mass flow of powder of 8 g·min⁻¹, which allowed a coverage rate of 2.1 m² per hour for a thickness between 300 µm and 500 µm. The cord of powder deposited on the substrate and had a width of about 25 mm. The flame spread on the substrate (a surface of about 240 mm in diameter) contributing to the smooth formation of the deposit, while maintaining surface temperature within the desired range.

The distance between the flame spray head and the substrate varied between about 120 mm and about 200 mm.

Coating obtained with these parameters present a glossy surface and a excellent adhesion of about 2.5 MPa, as measured using the Elcomer traction test according to EN 1542:1999.

### Example 3: Plasma spray

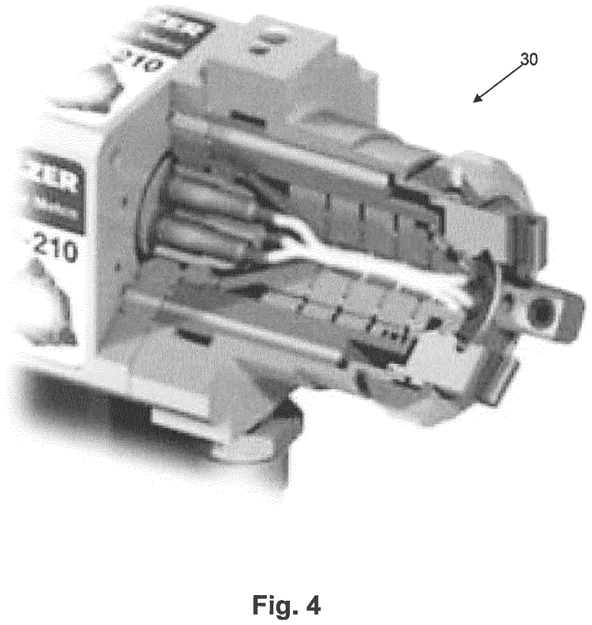

Figure 4 illustrates a plasma spray 30 device as used in the above example. This is a Triplex Pro 200-type tricathode plasma torch, operating with a gas mixture of Ar (60 L·min⁻¹) and N₂ (10 L·min⁻¹). The used anode has a maximum diameter of 11 mm, and the maximum intensity used was set to 450 A. Power used was 38 kW.

The powder was introduced with an external injector, at a mass flow of powder of 30 g·min⁻¹, which allowed a coverage rate of 1.2 m² per hour for a thickness between 300 µm and 500 µm. The cord of powder deposited on the substrate and had a width of about 7 mm.

The distance between the plasma spray head and the substrate varied between about 80 mm and about 100 mm.

Coating obtained with these parameters present a glossy surface and acceptable adhesion of about 0.8 MPa, as measured using the Elcomer traction test according to EN 1542:1999. Slight damage was observed on the substrate surface.

## Claims

1. A method for applying a ceramic coating to a heat sensitive substrate, comprising:
(a) heating a surface layer of at least a portion of the substrate to a temperature in the range of from 350 to 800°C, while maintaining a temperature of 250°C or less in the substrate at a depth of 1 mm or more below the surface layer;
(b) providing a ceramic material in a form suitable for thermal spraying; and
(c) thermal spraying the ceramic material onto the heated surface layer of the substrate;
wherein the ceramic material to be sprayed onto the heated surface comprises a fusible ceramic material.

2. A method according to claim 1, wherein the ceramic material is in a form suitable for flame spraying, and the ceramic material is flame sprayed onto the heated surface layer of the substrate using a spray gun or burner.

3. A method according to claim 1, wherein the ceramic material is in a form suitable for plasma spraying, and the ceramic material is plasma sprayed onto the heated surface layer of the substrate using a plasma sprayer.

4. A method according to any of claims 1 to 3, wherein in step (c) the surface is heated to a temperature in the range from 550°C to 1200°C.

5. A method according to any of claims 2 to 4, wherein the ceramic material is heated to a temperature of at least 850°C in the flame or in the plasma beam, for example a temperature in the range of from 1000°C to 1300°C or of at least 1500°C.

6. A method according to any preceding claim, wherein the ceramic material impacts the surface layer of the substrate at a velocity from 10 to 700 m/s, for example of at least 24 m/s, for example a velocity of from 24 to 100 m/s.

7. A method according to any preceding claim, wherein the said surface layer is heated to a temperature in the range of from 400 to 750°C, or from 450 to 550°C.

8. A method according to any preceding claim, wherein the temperature in the substrate at a depth of 1 mm or more below the surface layer is maintained at 200°C or less, or 150°C or less.

9. A method according to any preceding claim, wherein the ceramic material is in particulate form.

10. A method according to claim 9, wherein the d₅₀ of the particulate ceramic material is up to 100 µm, for example in the range of 1 to 100 µm.

11. A method according to any one of claims 1 to 8, wherein the ceramic material is in the form of a wire or rod.

12. A method according to any preceding claim, wherein the substrate is concrete.

## Patentansprüche

1. Verfahren zum Auftragen einer keramischen Beschichtung auf ein hitzeempfindliches Substrat, umfassend
(a) Erhitzen einer Oberflächenschicht von mindestens einem Teil des Substrats auf eine Temperatur im Bereich von 350 bis 800°C, während im Substrat auf einer Tiefe von 1 mm oder mehr unter der Oberflächenschicht eine Temperatur von 250°C oder weniger gehalten wird;
(b) Bereitstellen eines Keramikwerkstoffs in einer Form, geeignet für thermisches Spritzen; und
(c) thermisches Spritzen des Keramikwerkstoffs auf die erhitzte Oberflächenschicht des Substrats;
wobei der auf die erhitzte Oberfläche zu spritzende Keramikwerkstoff einen schmelzbaren Keramikwerkstoff umfasst.

2. Verfahren gemäß Anspruch 1, wobei der Keramikwerkstoff in einer Form ist, geeignet für Flammspritzen, und der Keramikwerkstoff mit Hilfe einer Spritzkanone oder eines Brenners auf die erhitzte Oberfläche des Substrats flammgespritzt wird.

3. Verfahren gemäß Anspruch 1, wobei der Keramikwerkstoff in einer Form ist, geeignet für Plasmaspritzen, und der Keramikwerkstoff mit Hilfe eines Plasmaspritzers auf die erhitzte Oberfläche des Substrats plasmagespritzt wird.

4. Verfahren gemäß irgendeinem der Ansprüche 1 bis 3, wobei in Schritt (c) die Oberfläche auf eine Temperatur im Bereich von 550°C bis 1200°C erhitzt wird.

5. Verfahren gemäß irgendeinem der Ansprüche 2 bis 4, wobei der Keramikwerkstoff auf eine Temperatur von mindestens 850°C in der Flamme oder im Plasmastrahl erhitzt wird, zum Beispiel auf einen Temperaturbereich von 1000°C bis 1300°C oder von mindestens 1500°C.

6. Verfahren gemäß irgendeinem vorherigen Anspruch, wobei der Keramikwerkstoff auf die Oberflächenschicht des Substrats mit einer Geschwindigkeit von 10 bis 700 m/s aufschlägt, zum Beispiel von mindestens 24 m/s, zum Beispiel mit einer Geschwindigkeit von 24 bis 100 m/s.

7. Verfahren gemäß irgendeinem vorherigen Anspruch, wobei die Oberflächenschicht auf eine Temperatur im Bereich von 400 bis 750°C, oder von 450°C bis 550°C, erhitzt wird.

8. Verfahren gemäß irgendeinem vorherigen Anspruch, wobei die Temperatur im Substrat auf einer Tiefe von 1 mm oder mehr unter der Oberflächenschicht auf 200°C oder weniger gehalten wird, oder auf 150°C oder weniger.

9. Verfahren gemäß irgendeinem vorherigen Anspruch, wobei der Keramikwerkstoff in Pulverform ist.

10. Verfahren gemäß Anspruch 9, wobei der d₅₀ des pulverförmigen Keramikwerkstoffs bis zu 100 µm ist, zum Beispiel im Bereich von 1 bis 100 µm.

11. Verfahren gemäß irgendeinem der Ansprüche 1 bis 8, wobei der Keramikwerkstoff in der Form eines Drahts oder Stabs ist.

12. Verfahren gemäß irgendeinem vorherigen Anspruch, wobei das Substrat Beton ist.

## Revendications

1. Procédé pour appliquer un revêtement céramique à un substrat sensible à la chaleur, comprenant :
(a) chauffer une couche superficielle d'au moins une partie du substrat à une température dans l'intervalle de 350 à 800°C, tout en maintenant une température de 250°C ou moins dans le substrat à une profondeur de 1 mm ou plus en-dessous de la couche superficielle ;
(b) fournir un matériau céramique en une forme adaptée à la projection thermique ; et
(c) projection thermique du matériau céramique sur la surface chauffée du substrat ;
où le matériau céramique à être projeté sur la surface chauffée comprend un matériau céramique liquéfiable.

2. Procédé selon la revendication 1, dans lequel le matériau céramique est en une forme adaptée à la projection à la flamme, et le matériau céramique est projeté à la flamme sur la couche superficielle chauffée du substrat à l'aide d'un pistolet à pulvérisation ou d'un brûleur.

3. Procédé selon la revendication 1, dans lequel le matériau céramique est en une forme adaptée à la projection au plasma, et le matériau céramique est projeté au plasma sur la couche superficielle chauffée du substrat à l'aide d'un pistolet au plasma.

4. Procédé selon quelconque des revendications 1 à 3, dans lequel dans l'étape (c) la surface est chauffée à une température dans l'intervalle de 550°C à 1200°C.

5. Procédé selon quelconque des revendications 2 à 4, dans lequel le matériau céramique est chauffé à une température d'au moins 850°C dans la flamme ou dans le faisceau de plasma, par exemple à une température dans l'intervalle de 1000°C à 1300°C ou d'au moins 1500°C.

6. Procédé selon quelconque des revendications précédentes, dans lequel le matériau céramique impacte sur la couche superficielle du substrat à une vélocité de 10 à 700 m/s, par exemple d'au moins 24 m/s, par exemple à une vélocité de 24 à 100 m/s.

7. Procédé selon quelconque des revendications précédentes, dans lequel ladite couche superficielle est chauffée à une température dans l'intervalle de 400 à 750°C, ou de 450 à 550°C.

8. Procédé selon quelconque des revendications précédentes, dans lequel la température dans le substrat à une profondeur de 1 mm ou plus en-dessous de la couche superficielle est maintenue à 200°C ou moins, ou 150°C ou moins.

9. Procédé selon quelconque des revendications précédentes, dans lequel le matériau céramique est en forme particulaire.

10. Procédé selon la revendication 9, dans lequel le d₅₀ du matériau céramique particulaire est jusqu'à 100 µm, par exemple dans l'intervalle de 1 à 100 µm.

11. Procédé selon quelconque des revendications 1 à 8, dans lequel le matériau céramique est dans la forme d'un fil ou d'une tige.

12. Procédé selon quelconque des revendications précédentes, dans lequel le substrat est le béton.
